# EUROPÄISCHE PATENTANMELDUNG

(11) **EP 4 640 338 A1**
(43) Veröffentlichungstag der Anmeldung: **29.10.2025**
(21) Anmeldenummer: 24172451.7
(22) Anmeldetag: 25.04.2024
(51) Int. Cl.: B22C 15/08, B22C 15/23, B22C 15/24, B22C 15/26, B22C 15/28

(54) **VENTILVORRICHTUNG, FORMMASCHINE UND VERFAHREN ZUR REGELUNG EINER VENTILVORRICHTUNG**

(71) Anmelder: Heinrich Wagner Sinto Maschinenfabrik GmbH, 57326 Bad Laasphe (DE)
(72) Erfinder: DITTRICH, Matthias, 35216 Biedenkopf (DE)
(74) Vertreter: advotec.

(57) **Zusammenfassung**

Die Erfindung betrifft eine Ventilvorrichtung (10) aufweisend eine Sperrventileinrichtung (20) mit einer Ventilstange (21) und einem einends an der Ventilstange (21) angeordneten Verschlusselement (22) für die Druckluftzufuhr zu einem Verbraucher (11), weiter aufweisend eine Betätigungseinrichtung (30) mit einem Hydraulikzylinder (31), wobei der Kolben (32) des Hydraulikzylinders (31) mit der Ventilstange (21) fest verbunden ist und zur Betätigung der Sperrventileinrichtung (20) innerhalb des Zylindergehäuses (33) des Hydraulikzylinders (31) hydraulisch antreibbar ist, wobei eine Regeleinrichtung (40) zur Regelung der Kolbenbewegung und eine Messeinrichtung (50) zur Ermittlung der Kolbenposition umfasst ist, wobei eine von der Regeleinrichtung (40) in Abhängigkeit der Kolbenposition ansteuerbare Proportionalventileinrichtung (60) fluidleitend mit dem Hydraulikzylinder (31) verbunden ist. Ferner betrifft die Erfindung eine Formmaschine sowie ein Verfahren zur Regelung einer Ventilvorrichtung.

## Beschreibung

Die Erfindung betrifft eine Ventilvorrichtung aufweisend eine Sperrventileinrichtung mit einer Ventilstange und einem einends an der Ventilstange angeordneten Verschlusselement für die Druckluftzufuhr zu einem Verbraucher, weiter aufweisend eine Betätigungseinrichtung mit einem Hydraulikzylinder, wobei der Kolben des Hydraulikzylinders mit der Ventilstange fest verbunden ist und zur Betätigung der Sperrventileinrichtung innerhalb des Zylindergehäuses des Hydraulikzylinders hydraulisch antreibbar ist. Ferner betrifft die Erfindung eine Formmaschine sowie ein Verfahren zur Regelung einer Ventilvorrichtung.

Beim Verdichten von Formstoff, beispielsweise Formsand, in einer Formmaschine zur Herstellung einer Form aus dem Formstoff und anderen vergleichbaren Anwendungen ist es in der Regel erforderlich, dem Verbraucher, beispielsweise einem Formkasten einer Formmaschine, Druckluft zuzuführen. Die Druckluft zur pneumatischen Verdichtung des Formstoffs soll jedoch nicht schlagartig auf den Formstoff aufgebracht werden, weil beispielsweise bei einer Formsand-Verpressung dabei keine durchgängig gleichmäßige Verdichtung des Formsandes erfolgen kann.

Andererseits arbeitet eine entsprechende Einrichtung aber unrentabel, wenn als viel Zeit vergeht, bis der erforderliche Druck der beim Verbraucher bereitgestellten Druckluft erreicht ist. Zur gezielten Aufbringung der Druckluft sind regelmäßig pneumatische Sperrventile vorgesehen, die mit einer Betätigungseinrichtung geschlossen beziehungsweise geöffnet werden können. Das Verschlusselement der Sperrventile kann einen mit Druckluft befüllbaren Gehäusezylinder verschließen oder öffnen, wobei die Druckluft bei Öffnung des Sperrventils in Richtung des Verbrauchers strömt. Das Sperrventil kann mittels der Betätigungseinrichtung, die beispielsweise hydraulisch betrieben wird, angesteuert werden. Derartige gattungsgemäße Betätigungseinrichtungen weisen regelmäßig ein diskret schaltendes Wegeventil, beispielsweise ein 4/2-Wegeventil, zur Ansteuerung eines hydraulisch beweglichen Zylinders, welcher mit dem Sperrventil verbunden ist, auf. Das heißt mit anderen Worten, dass gattungsgemäß, mittels einem diskret angesteuerten Hydraulikzylinder ein Luftstrom zum Verbraucher geleitet werden kann. Sowohl der Kolbenhub als auch die diskreten Öffnungszeiten des Sperrventils werden gattungsgemäß manuell eingestellt und nachjustiert, wodurch es zu einem übermäßigen Verbrauch an relativ kostenintensiv zu erzeugender Druckluft kommen kann. Zudem bietet das diskrete Schaltverhalten des den Hydraulikzylinder ansteuernden Wegeventils keine Möglichkeit den Luftstrom, beispielsweise zur Optimierung der Formstoffverdichtung, aktiv zu regeln und zu kontrollieren. Dies vermindert die Präzision und Genauigkeit der Druckluftzuführung zum Verbraucher wesentlich und führt zudem zu einem erhöhten Energieverlust.

Die Erfindung hat sich deshalb die Aufgabe gestellt, eine Ventilvorrichtung und ein Verfahren zur Regelung einer Ventilvorrichtung so auszugestalten, dass die Zufuhr eines Druckluftstroms zu einem Verbraucher aktiv regelbar und kontrollierbar ist und eine erhöhte Energieeffizienz gewährleistet werden kann. Zudem sollen die erfindungsgemäße Vorrichtung bzw. das Verfahren in einfacherweise zu implementieren, zu fertigen und zu warten sein. Weiter soll die Ventilvorrichtung bzw. das Verfahren umsetzbar sein ohne die derzeitigen anforderungsgemäßen Taktzeiten einer Anlage, bei der die Ventilvorrichtung bzw. das Verfahren zum Einsatz kommt, signifikant zu erhöhen.

Zur Lösung der Aufgabe wird eine Vorrichtung mit den Merkmalen des unabhängigen Anspruchs 1 vorgeschlagen. Ferner wird eine Formmaschine mit einer solchen Ventilvorrichtung vorgeschlagen. Ebenfalls wird ein Verfahren zur Regelung einer Sperrventileinrichtung mit den Merkmalen des Anspruchs 14 vorgeschlagen.

Die erfindungsgemäße Ventilvorrichtung weist eine Sperrventileinrichtung mit einer Ventilstange und einem einends an der Ventilstange angeordneten Verschlusselement für die Druckluftzufuhr zu einem Verbraucher, beispielsweise zu einem den zu verdichtenden Formstoff beinhaltenden Formkasten, auf. Zudem weist die Ventilvorrichtung eine Betätigungseinrichtung mit einem Hydraulikzylinder auf, wobei der Kolben des Hydraulikzylinders mit der Ventilstange der Sperrventileinrichtung fest verbunden ist und zur Betätigung der Sperrventileinrichtung innerhalb des Zylindergehäuses des Hydraulikzylinders hydraulisch antreibbar ist. Das heißt mit anderen Worten, dass der Kolben innerhalb des Zylindergehäuses durch hydraulische Druckbeaufschlagung bewegt werden kann. Dadurch, dass die Ventilstange fest mit dem Kolben des Hydraulikzylinders verbunden ist, wird bei einer Bewegung des Kolbens auch die Ventilstange mit dem daran angeordneten Verschlusselement bewegt und kann eine Druckluftzufuhr zu einem Verbraucher freigeben oder sperren. Das Verschlusselement kann beispielsweise als Ventilkegel oder Ventilteller ausgebildet sein. Das Verschlusselement kann derart mit einem Ventilsitz zusammenwirken, dass das Verschlusselement bei Sperrung der Druckluftzufuhr zu einem Verbraucher auf dem Ventilsitz aufliegt und den Verbraucher gegenüber der Druckluftzufuhr abdichtet. Das Verschlusselement kann in der Schließrichtung der Sperrventileinrichtung von einer Druckluftströmung belastet sein. Die Ventilstange ist bevorzugt an dem Verschlusselement auf der dem Ventilsitz entgegen gerichteten Seite vorgesehen. Die Längsachse der Ventilstange verläuft bevorzugt parallel zur Bewegungsrichtung des Kolbens.

Die erfindungsgemäße Ventilvorrichtung ist dadurch gekennzeichnet, dass die Ventilvorrichtung eine Regeleinrichtung zur Regelung der Kolbenbewegung und eine Messeinrichtung zur Ermittlung der Kolbenposition aufweist. Die Kolbenbewegung kann bevorzugt eine Kolbenhubbewegung sein. Durch die Verbindung des Kolbens mit dem Verschlusselement der Sperrventileinrichtung kann durch die Regelung der Kolbenbewegung auch die Stellung der Sperrventileinrichtung geregelt werden und somit die Druckluftzufuhr zum Verbraucher. Im Rahmen der Erfindung wurde es erkannt, dass zur Regelung der Kolbenbewegung eine Messeinrichtung, welche die Kolbenposition ermittelt, vorteilhaft ist. Über die Kolbenposition kann auch der Kolbenhub, der auch als Hublänge bezeichnet werden kann, und/oder die Stellung des Verschlusselements der Sperrventileinrichtung ermittelt werden.

Weiter wurde es im Rahmen der Erfindung als wesentlich erkannt, dass eine von der Regeleinrichtung in Abhängigkeit der Kolbenposition ansteuerbare Proportionalventileinrichtung fluidleitend mit dem Hydraulikzylinder verbunden ist. Die Proportionalventileinrichtung ist derart fluidleitend mit dem Hydraulikzylinder verbunden, dass die Zufuhr und Abfuhr einer in einer entsprechenden Druckflüssigkeitsquelle bereitgestellten Druckflüssigkeit, die auch als Hydraulikflüssigkeit bezeichnet werden kann, in den Hydraulikzylinder zuführbar und aus dem Hydraulikzylinder abführbar ist. Hierzu können Hydraulikleitungen zwischen Hydraulikzylinder und Druckflüssigkeitsquelle angeordnet sein, wobei die Proportionalventileinrichtung zwischen Hydraulikzylinder und Druckflüssigkeitsquelle angeordnet ist.

Im Rahmen der Erfindung ist eine Proportionalventileinrichtung eine stetige Ventileinrichtung, die, bevorzugt mittels eines Proportionalmagneten, nicht nur diskrete Schaltstellungen zulässt, sondern einen stetigen Übergang der Ventilöffnung ermöglicht. Dadurch können veränderliche Volumenströme, vorliegend einer Druckflüssigkeit, an den Hydraulikzylinder geführt werden. Eine Proportionalventileinrichtung kann elektromagnetisch gesteuert sein und kann beliebige Zwischenstellungen zwischen vollständig offen und vollständig geschlossen annehmen. Zur Einstellung des ausgebbaren Volumenstroms kann die Proportionalventileinrichtung zumindest einen, bevorzugt mehrere, axial verschiebbare Ventilkolben als Absperrkörper aufweisen, die entsprechende Eingangs und Ausgangsanschlüsse verbinden oder verschließen. Die Proportionalventilrichtung der erfindungsgemäßen Ventilvorrichtung lässt somit eine präzise Steuerung des dem Hydraulikzylinder zugeführten Volumenstroms an Druckflüssigkeit aufgrund des stetigen Schaltverhaltens der Proportionalventileinrichtung zu. Die Proportionalventileinrichtung kann stromgesteuert und/oder spannungsgesteuert betrieben werden.

Im Rahmen der Erfindung wurde es erkannt, dass anhand der Ermittlung der Kolbenposition unter Berücksichtigung der Zeit sowohl die Geschwindigkeit als auch die Beschleunigung des Kolbens während der Kolbenbewegung ermittelt werden kann. Somit kann die Regeleinrichtung die Proportionalventileinrichtung in Abhängigkeit der Kolbenposition, der Kolbengeschwindigkeit und/oder der Kolbenbeschleunigung ansteuern.

Durch die Regeleinrichtung in Verbindung mit der aktiven Überwachung der Kolbenposition und/oder der Kolbenbewegung durch die Messeinrichtung können Veränderungen der Bewegung, insbesondere des Fahrwegs, des Kolbens frühzeitig erkannt werden und es kann eine entsprechende Nachregelung erfolgen. Zudem können mittels der Messeinrichtung und/oder Regeleinrichtung Wartungsbedarfe frühzeitig erkannt und als Fernwartungen, beispielsweise über Remote-Verbindungen, durchgeführt werden, wodurch die Planbarkeit der Wartungseinsätze verbessert und zudem der Aufwand reduziert werden kann. Weiter ermöglicht die erfindungsgemäße Ventilvorrichtung eine einfache Inbetriebnahme der Ventilvorrichtung sowie des mit der Ventilvorrichtung verbundenen Verbrauchers, da die Kolbenbewegung, insbesondere die Einstellung des Kolbenhubs, nicht mehr vom Monteur, beispielsweise über eine Drossel, manuell vorgenommen werden muss, sondern anhand der Regeleinrichtung automatisiert erfolgen kann. Auch nachträgliche Einstellungen der Ventilvorrichtung, beispielsweise bei Wechsel eines Verbrauchers, können ohne manuelle Justierung der Sperrventileinrichtung oder der Betätigungseinrichtung selbst erfolgen, da die diese über die Regeleinrichtung, beispielsweise durch Eingabe eines gewünschten Soll-Werts über eine Schnittstelle zur Regeleinrichtung, vorgenommen werden können. Weiter kann auch die Ausgabe der Druckluft zu einem Verbraucher wesentlich variabler und flexibler an den Verbraucher angepasst werden, wodurch die Beaufschlagung des Verbrauchers mit Druckluft, beispielsweise zur Verdichtung von Formsand, verbessert werden kann. Zudem können vorteilhafterweise die Öffnungszeiten der Sperrventileinrichtung genauer kontrolliert und die Energieeffizienz erhöht werden. Die Montage der erfindungsgemäßen Ventilvorrichtung erzeugt gegenüber einer gattungsgemäßen Ventilvorrichtung keinen Mehraufwand, da diese in einfacher Art und Weise an einem Verbraucher angebracht oder an bestehenden Verbrauchern nachgerüstet werden können.

Die erfindungsgemäße Ventilvorrichtung kann bevorzugt an einer Formmaschine, insbesondere einer Maschine zur Herstellung von Gussformen, oder einer Kernschiessmaschine angeordnet sein.

Vorteilhafte Ausführungsformen der Erfindung sind Gegenstand der abhängigen Ansprüche. In den Rahmen der Erfindung fallen zudem sämtliche Kombinationen aus mindestens zwei in der Beschreibung, den Ansprüchen und/oder den Figuren offenbarten Merkmalen. Es versteht sich, dass die zu der Ventilvorrichtung gemachten Ausführungen sich in äquivalenter Weise auf die erfindungsgemäße Formmaschine beziehen, ohne für diese separat genannt zu werden. Ebenfalls beziehen sich sämtliche zu der Ventilvorrichtung und/oder der Formmmaschine offenbarten Merkmale und Ausführungsformen in äquivalenter, wenn auch nicht gleicher Art und Weise auf das erfindungsgemäße Verfahren. Hierbei versteht es sich insbesondere, dass sprachübliche Umformungen und/oder ein sinngemäßes Ersetzen von den jeweiligen Begrifflichkeiten im Rahmen der üblichen sprachlichen Praxis, insbesondere durch das Verwenden von durch die allgemein anerkannte Sprachliteratur gestützten Synonymen, vom vorliegenden Offenbarungsgehalt umfasst sind, ohne in ihrer jeweiligen Ausformulierung explizit erwähnt zu werden.

Die Messeinrichtung kann zur Ermittlung der Kolbenposition einen Lasertriangulationssensor und/oder einen berührungslosen Wegmesssensor und/oder einen Ultraschalldistanzsensor aufweisen. Der Wegmesssensor kann bevorzugt als magnetostriktiver Wegmesssensor ausgebildet sein. Mit anderen Worten kann anhand der Messeinrichtung die Kolbenposition mittels Lasertriangulation und/oder magnetostriktiver Wegmessung und/oder Ultraschalldistanzmessung ermittelt werden. Weiter kann die Messeinrichtung dazu eingerichtet sein, neben der Kolbenposition auch eine Veränderung der Kolbenposition über eine bestimmte Zeit zu erfassen, sodass die Messeinrichtung die Geschwindigkeit und/oder die Beschleunigung des Kolbens ermitteln kann. Die Distanzmessung erfolgt vorteilhafterweise berührungslos.

Ein Lasertriangulationssensor weist zumindest eine Strahlungsquelle und einen Detektor mit einer Optik auf. Wird von der Strahlungsquelle, bevorzugt einem Laser, Licht auf das Messobjekt, vorliegend den Kolben aufgebracht, wird dieses in einem bestimmten Triangulationswinkel reflektiert. Das reflektierte Licht wird dann über die Optik auf dem Detektor registriert. Dadurch kann über die Position und die Lichtfleckfläche der Abstand zum Kolben und somit die Position des Kolbens ermittelt werden. Ein magnetostriktiver Wegmesssensor zur Positionsbestimmung kann ein magnetostriktives Messelement, das beispielsweise als Messstab ausgebildet ist, einen Positionsmagnet und eine Auswerteelektronik aufweisen. Der Positionsmagnet kann als Permanentmagnet ausgebildet sein und innerhalb oder am Kolben angeordnet sein. Zur Ermittlung der Kolbenposition kann ein Stromimpuls in das Messelement gegeben werden, wodurch sich ein Magnetfeld um das Messelement bildet. Die Magnetfeldlinien des Messelements können sich in der Folge mit dem Magnetfeld des Positionsmagneten, der am Kolben angeordnet sein kann, kreuzen. Durch diese Kreuzung der Magnetfeldlinien kann sich das magnetostriktive Messelement verformen. Diese mechanische Verformung kann zur der seit der Initiierung des Stromimpulses vergangenen Zeit in Beziehung gesetzt werden und somit die aktuelle Position des Positionsmagneten und somit auch des Kolbens ermittelt werden. Mit dem magnetostriktiven Wegmesssensor lässt sich eine Auflösung von bis zu 1 µm und eine Messfrequenz von bis zu 10000 Hertz erreichen. Zusätzlich oder alternativ kann die Positionserfassung des Kolbens mit zumindest einem Ultraschallsensor anhand der Laufzeit reflektierter Ultraschallimpulse erfolgen. Der Ultraschallsensor kann eine Ausgangsstufe, einen Ultraschallwandler und eine Auswerteeinheit umfassen. Mithilfe der Ausgangsstufe wird der Ultraschallwandler über eine Sinusspannung angeregt und somit ein Ultraschallimpuls ausgesendet. Dieser Ultraschallimpuls kann am Kolben reflektiert werden. Durch Auswertung der Zeit zwischen Signalausgabe und Empfang des reflektierten Signals sowie der Schallausbreitungsgeschwindigkeit kann die Position des Kolbens ermittelt werden. Bevorzugt wird eine Auflösung von bis zu 0,3 mm und eine Messfrequenz zwischen 250 und 500 Hertz erreicht. Die Positionsermittlung mittels Ultraschallsensor ist vorteilhafterweise kostengünstig und einfach zu implementieren.

Die Proportionalventileinrichtung kann als 4/4-Proportionalventil ausgebildet sein und/oder zumindest ein 4/4-Proportionalventil umfassen. Im Rahmen der Erfindung wurde es erkannt, dass die diskret schaltenden, meist als 4/2-Wegeventile ausgebildeten, Wegeventile zur Regelung der Kolbenbewegung und somit zur Regelung der gesamten Ventilvorrichtung ungeeignet sind. Daher wird bevorzugt ein 4/4-Proportionalwegeventil eingesetzt, dessen Ventilkolbenstellungen durch elektrische Ansteuerung eines Elektromagneten verändert werden können, wodurch der Volumenstrom präzise geregelt werden kann. Das 4/4-Proportionalventil kann eine Stange und an beiden Enden der Stange je einen Magneten, der auch als Anker bezeichnet ist, und Ventilkolben, anhand derer die über die Anschlüsse ein- und/oder ausgehenden Volumenströme gesteuert werden können, sowie eine Spule, über die die Magnete eine horizontale Kraft erfahren, aufweisen. Wird ein Strom an die Spule angelegt, entsteht ein Magnetfeld, durch das eine Kraft auf die Stange bzw. die Ventilkolben wirkt. Das 4/4-Proportionalventil kann vier Anschlüsse aufweisen, nämlich bevorzugt die Anschlüsse für Tank (T), Pressure (P), sowie die Verbraucheranschlüsse A und B, deren Volumenströme über die verschiedenen Ventilkolbenstellungen geregelt werden können. Die Anschlüsse Pressure und Tank sind mit der Druckflüssigkeitsquelle verbunden, wobei über den Anschluss Pressure dem Proportionalventil Druckflüssigkeit zugeleitet und über den Anschluss Tank Druckflüssigkeit aus dem Proportionalventil abgeleitet werden kann. Einer der Verbraucheranschlüsse A und B kann zur Zuleitung der Druckflüssigkeit zum Hydraulikzylinder und der andere Verbraucheranschluss zur Ableitung der Druckflüssigkeit aus dem Hydraulikzylinder eingerichtet sein. Weiter kann die Ventilkolbenstellung in vier Hauptstellungen überführt werden. Wird kein Strom an der Spule angelegt, werden der Magnet oder die Magnete über eine Rückstellfeder in seine bzw. ihre Grundposition überführt und die Verbraucheranschlüsse A und B sind geschlossen. Bei einem Defekt bzw. sofern kein Signal anliegt, können die Ventilkolben in eine sogenannte "fail-safe"-Stellung, bei der die Rückstellfeder maximal entspannt wird, überführt werden. In der rechten Endstellung sind der Anschluss Tank und der Verbraucheranschluss A sowie der Anschluss Pressure und der Verbraucheranschluss B miteinander verbunden, während in der linken Endstellung der Anschluss Tank und der Verbraucheranschluss B sowie der Anschluss Pressure und der Verbraucheranschluss A miteinander verbunden sind.

Die Ventilkolben der Proportionalventileinrichtung können stromgesteuert verstellbar sein. Insbesondere kann die Verstellung der Ventilkolben durch Aufgabe eines Stroms mit der Stromstärke von 4 bis 20 Milliampere (mA) auf die Spule der Proportionalventileinrichtung erfolgen. Ein Wert von 12 Milliampere kann als Schwellenwert gesetzt werden, um die Bewegungsrichtung des Ventilkolbens zu bestimmen.

Die Regeleinrichtung kann einen PID-Regler (Proportional Integral Derivative Controller) aufweisen. Der PID-Regler kann die Kolbenposition und/oder die Kolbenbewegung berücksichtigen, sodass die Kolbenposition und/oder die Kolbenbewegung ein Eingangssignal des PID-Reglers sein können. Das Ausgangssignal des PID-Reglers kann ein Steuersignal sein, mit dem die Proportionalventileinrichtung angesteuert wird und über das der Volumenstrom an Druckflüssigkeit in den Hydraulikzylinder änderbar ist. Beispielsweise kann das Ausgangssignal des PID-Reglers ein Korrekturstrom sein, über den die Stellung der Ventilkolben der Proportionalventileinrichtung änderbar ist. Die Regeleinrichtung kann als digitale Regeleinrichtung ausgebildet sein. Zur Erfassung der Regelgrößen kann die Regeleinrichtung einen Analog-DigitalWandler und zum Ausgeben der Stellgröße, einen Digital-AnalogWandler aufweisen.

Der Kolben des Hydraulikzylinders kann doppelt wirkend ausgebildet sein. Dieser doppelt wirkende Kolben kann vorteilhafterweise in zwei Richtungen bewegt bzw. angetrieben werden, wodurch auf eine Rückstelleinrichtung verzichtet werden kann. Zum Antrieb des doppelt wirkenden Kolbens ist dem Hydraulikzylinder an zumindest zwei Öffnungen Druckflüssigkeit zuführbar, um ein Absenken und ein Anheben des Kolbens zu ermöglichen.

An dem Kolben des Hydraulikzylinders, der Ventilstange gegenüberliegend, kann eine zu dieser achsfluchtende Kolbenstange angeordnet sein. Die Ventilstange und die Kolbenstange können ungleiche Durchmesser aufweisen. Aufgrund der unterschiedlichen Durchmesser der Kolbenstange und der Ventilstange weist der Kolben zwei ungleiche Kolbenflächen auf. Dies kann ein unterschiedliches Volumen in den beiden Zylinderkammern zur Folge haben und lässt eine vorteilhafte Einstellung der Druckverhältnisse zur Bewegung des Kolbens innerhalb des Hydraulikzylinders zu. Die Kolbenstange kann einen Durchmesser zwischen 50 und 60 mm, bevorzugt 56 mm, aufweisen und die Ventilstange kann einen Durchmesser zwischen 40 und 50 mm, bevorzugt 45 mm, aufweisen.

Die Bewegung des Kolbens kann durch ein ortsfestes Anschlagselement begrenzt sein. Vorzugsweise kann das Anschlagselement einstellbar sein. So kann vorteilhafterweise eine maximale Druckluftströmung durch die Sperrventileinrichtung definiert werden, da der Hub des Verschlusselements durch einen ortsfesten Anschlag begrenzt ist. Ist der Anschlag einstellbar, kann in einfacher Art und Weise die maximale Öffnung der Sperrventileinrichtung an unterschiedliche Anforderungen angepasst werden.

An dem Kolben des Hydraulikzylinders, der Ventilstange gegenüberliegend, kann eine zu der Ventilstange achsfluchtende Kolbenstange angeordnet sein. Die Kolbenstange kann mit ihrer freien, dem Verschlusselement abgewandten Stirnseite an dem Anschlagselement zur Anlage gebracht werden. Das heißt mit anderen Worten, dass die Kolbenstange mit ihrer vom Verschlusselement abgewandten Stirnseite an dem Anschlagselement anschlagen kann und somit die Hubbewegung des Kolbens begrenzt. Zur Begrenzung des Kolbenhubs mittels eines Anschlagselements ist es unerheblich, ob die Kolbenstange und die Ventilstange einen ungleichen Durchmesser oder einen gleichen Durchmesser aufweisen. Die Ventilstange und die Kolbenstange können einstückig ausgeführt sein. Es ist auch denkbar, dass der Kolben des Hydraulikzylinders, die Ventilstange und die Kolbenstange einstückig ausgeführt sind.

Bei der Begrenzung des Kolbenhubs kann es vorteilhaft sein, dass an der freien Stirnseite der Kolbenstange und/oder an dem Anschlagselement eine Anschlagdämpfung vorgesehen ist.

Die Ventilvorrichtung kann eine ortsfeste Rückstellfeder aufweisen, die so angeordnet ist, dass die Ventilstange bei dem Öffnen der Sperrventileinrichtung gegen die Federkraft der Rückstellfeder bewegt wird. Die Rückstellfeder kann so angeordnet sein, dass die Rückstellfeder einerseits an dem Anschlagselement ortsfest und andererseits an einem an der Kolbenstange befindlichen Abstützelement axial beweglich abgestützt ist. Ein Abstützbund des Abstützelements kann so angebracht sein, dass die Rückstellfeder weitgehend auf der Kolbenstange geführt ist. Die Rückstellfeder kann als Schraubenfeder ausgeführt sein. Die Rückstellkraft der Rückstellfeder kann eine lineare Feder-Kennlinie mit konstanter Federzahl aufweisen und in Schließrichtung der Sperrventileinrichtung wirken. Weiter kann die Rückstellkraft der Rückstellfeder derart ausgestaltet sein, dass die Rückstellkraft die Ventil-Kennlinie der Ventilsperreinrichtung nicht verändert.

Der Proportionalventileinrichtung vorgelagert kann eine einstellbare Druckregelungseinrichtung angeordnet sein. Die Druckreglungseinrichtung kann zwischen Proportionalventileinrichtung und Druckflüssigkeitsquelle angeordnet sein. Die Druckregelungseinrichtung kann als Druckmindereinrichtung ausgebildet sein. Durch die Druckregelung ist ein vorgegebener Druck der Druckflüssigkeitsströmung mechanisch und/oder elektronisch in einfacher Art und Weise einstellbar.

In einem zweiten Aspekt betrifft die Erfindung eine Formmaschine zum Verdichten eines Formstoffes, aufweisend einen mit dem Formstoff befüllbaren Formkasten, wobei in dem Formkasten ein Modell anordbar ist, und wobei der Formkasten an eine Druckluftzufuhr angeschlossen ist. Dabei weist die Formmaschine eine erfindungsgemäße Ventilvorrichtung zur Freigabe der Druckluftzufuhr zu dem Formkasten auf, wobei durch Druckluftbeaufschlagung und anschließendes Pressen des Formstoffes eine Form ausbildbar ist. Die Formmaschine kann beispielsweise zur Herstellung von Gussformen oder zur Herstellung von Kernen ausgebildet sein. Der Formstoff kann Formsand, tongebundener und/oder bentonitgebundener Grünsand sein. Durch die Druckluftbeaufschlagung wird der Formstoff anhand des Luftstroms auf dem Modell verdichtet. Zur endgültigen Verdichtung des Formstoffes kann der Formstoff, beispielsweise mit einer hydraulisch angetriebenen Stempelpresse, weiter verdichtet werden, wobei je nach Kontur und Größe der Form eine unterschiedliche Anzahl von Stempeln verwendet werden kann. Die bei der Druckluftbeaufschlagung eingebrachte Luft kann über zumindest eine Düsen und/oder zumindest ein Entlüftungsventil aus dem Formkasten entweichen.

In einem dritten Aspekt betrifft die Erfindung ein Verfahren zur Regelung einer Ventilvorrichtung aufweisend eine Sperrventileinrichtung mit einer Ventilstange und einem einends an der Ventilstange angeordneten Verschlusselement für die Druckluftzufuhr zu einem Verbraucher, und weiter aufweisend eine Betätigungseinrichtung mit einem Hydraulikzylinder, wobei der Kolben des Hydraulikzylinders mit der Ventilstange fest verbunden ist und zur Betätigung der Sperrventileinrichtung innerhalb des Zylindergehäuses des Hydraulikzylinders hydraulisch angetrieben werden kann. Erfindungsgemäß wird die Kolbenposition mittels einer Messeinrichtung ermittelt und die Kolbenbewegung in Abhängigkeit der ermittelten Kolbenposition geregelt, indem eine fluidleitend mit dem Hydraulikzylinder verbundene Proportionalventileinrichtung derart angesteuert wird, dass der dem Hydraulikzylinder zugeführte Volumenstrom an Druckflüssigkeit verändert wird. Durch das erfindungsgemäße Verfahren kann ein schlagartiges Öffnen der Druckluftzufuhr zu dem Verbraucher verhindert werden, und ein modulierendes Öffnungsverhalten erreicht werden. Insbesondere kann der Volumenstrom an Druckflüssigkeit, der über einen Ausgang der Proportionalventileinrichtung ausgegeben wird, stetig verändert und somit angepasst werden. Insbesondere kann der Volumenstrom an Druckflüssigkeit, der dem Hydraulikzylinder zugeführt wird, in Abhängigkeit der ermittelten Kolbenposition geregelt werden, indem die Ventilkolben der Proportionalventileinrichtung stromgesteuert verstellt werden. Bevorzugt kann das erfindungsgemäße Verfahren zur Regelung einer erfindungsgemäßen Ventilvorrichtung nach einem ersten Aspekt der Erfindung eingesetzt werden.

Gemäß einer Ausgestaltung des Verfahrens, können die Kolbenposition und/oder der Kolbenhub in regelmäßigen zeitlichen Abständen mittels der Messeinrichtung erfasst werden und als Ist-Wert an eine Regeleinrichtung übermittelt werden. Mittels der Regeleinrichtung kann der Ist-Wert mit einem Soll-Wert verglichen werden, wobei bei einer Abweichung von Soll-Wert und Ist-Wert das zur Steuerung der Proportionalventileinrichtung gesendete Steuersignal von der Regeleinrichtung angepasst werden kann. Da die Messeinrichtung zur Ermittlung der Kolbenposition ausgebildet ist, kann die Messeinrichtung auch den Kolbenhub ermitteln, da der Kolbenhub im Rahmen der Erfindung als die Strecke definiert ist, die der Kolben aufgrund der Beaufschlagung mit Druckflüssigkeit im Hydraulikzylinder zurücklegt. Der maximale Kolbenhub ist die Strecke, die das Verschlusselement bei maximaler Öffnung der Druckluftzufuhr vom Ventilsitz entfernt ist. Da die Kolbenposition in der unteren Endlage, in der die Druckluftzufuhr zum Verbraucher geschlossen ist, bekannt ist, kann durch Erfassung der Kolbenposition in der oberen Endlage der maximale Kolbenhub, also die Strecke zwischen unterer und oberer Endlage, in einfacher Art und Weise ermittelt werden. Je nach Anforderung, beispielsweise in am Abhängigkeit eines Formstoffes des Modells und/oder des Formkastens, kann zur Druckluftbeaufschlagung des Verbrauchers in der Regeleinrichtung ein Soll-Wert hinterlegt sein. Dieser Soll-Wert kann in regelmäßigen Abständen, beispielsweise immer dann, wenn ein Ist-Wert erfasst wird, mit dem Ist-Wert verglichen werden. Hierbei versteht es sich, dass Ist-Wert und Soll-Wert die gleiche Dimension, beispielsweise den Kolbenhub in Millimetern, aufweisen können. Bei einer Abweichung von Soll-Wert und Ist-Wert kann das zur Steuerung der Proportionalventileinrichtung gesendete Steuersignal, das insbesondere als Steuerstrom ausgebildet sein kann, durch die Regeleinrichtung, bevorzugt automatisch, angepasst werden. Somit kann in einfacher Art und Weise die Druckluftbeaufschlagung geregelt werden, ohne dass manuelle Eingriffe und/oder Erfahrungswerte notwendig sind.

Weitere vorteilhafte Ausführungsformen des Verfahrens ergeben sich aus den Merkmalsbeschreibungen der auf dem Vorrichtungsanspruch 1 zurückbezogenen Unteransprüche sowie dem auf eine Formmaschine bezogenen Vorrichtungsanspruch.

Nachfolgend werden bevorzugte Ausführungsformen unter Bezugnahme auf die beigefügten Zeichnungen näher erläutert.

Es zeigen:
- **Fig. 1**: eine Ausführungsform einer erfindungsgemäßen Formmaschine in Schnittansicht;
- **Fig. 2**: eine Ausführungsform einer erfindungsgemäßen Ventilvorrichtung in Schnittansicht; und
- **Fig. 3**: eine Ausführungsform eines 4/4-Proportionalventils einer erfindungsgemäßen Ventilvorrichtung.

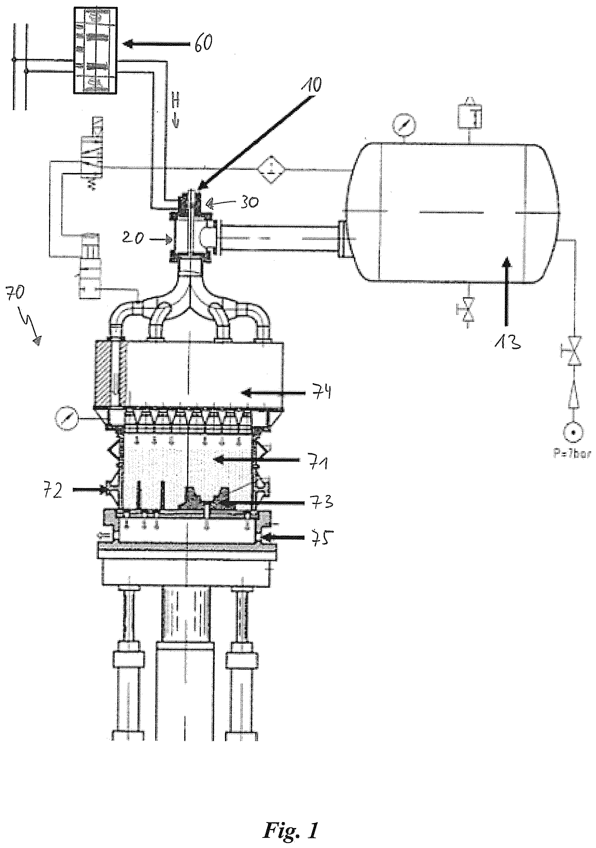

**Figur 1** zeigt eine erfindungsgemäße Formmaschine 70 mit einer erfindungsgemäßen Ventilvorrichtung 10. Der Formstoff 71 kann über eine hier nicht gezeigte Dosiereinrichtung in den Formkasten 72 eingefüllt werden und das Modell 73 bedecken. Durch Druckluftbeaufschlagung über die Ventilvorrichtung 10 und anschließendes Verpressen des Formstoffs 71 mittels der Presseinrichtung 74 kann eine Form, beispielsweise zur Herstellung eines dem Modell 73 entsprechenden Gussteils, hergestellt werden. Die Druckluftquelle 13 stellt die zur Druckluftbeaufschlagung erforderliche Druckluft bereit und ist mit der Ventilvorrichtung 10, druckluftleitend verbunden. Um dem Formkasten 72 die Druckluft zuzuführen, weist die Ventilvorrichtung eine Betätigungseinrichtung 30 auf, der Druckflüssigkeit H zugeführt werden kann. Der Volumenstrom an Druckflüssigkeit H, welcher der Betätigungseinrichtung 30 zugeführt wird, kann mittels mit der Proportionalventileinrichtung 60 gesteuert und verändert werden. Durch Öffnen der Sperrventileinrichtung 20 mittels der Bestätigungseinrichtung 30 kann der Druckluftstrom dem Formkasten 72 zugeführt und auf das Modell 73 geleitet werden. Die Druckluftquelle 13, beispielsweise ein Druckluftbehälter, ist direkt an der Ventilvorrichtung 10 montiert, um eine auseichende Druckluftversorgung bereitzustellen und pneumatische Druckabfälle zu minimieren. Aus Figur 1 ist es ersichtlich, dass bei Öffnung der Sperrventilvorrichtung 20 die Druckluft über die Presseinrichtung 74 in den, bevorzugt hermetisch abgedichteten, Formkasten 72 strömt. Die Luft kann anschließend über Luftauslässe 75, die beispielsweise als Düsen oder Entlüftungsventil ausgebildet sein können, aus dem Formkasten 72 entweichen. Nach der Formstoffverteilung und Vorverdichtung durch die Druckluftbeaufschlagung, kann der Formstoff 71 über die, bevorzugt, hydraulisch betriebene, Presseinrichtung 74 gepresst und anforderungsgemäß zum Erhalt einer Form verdichtet werden.

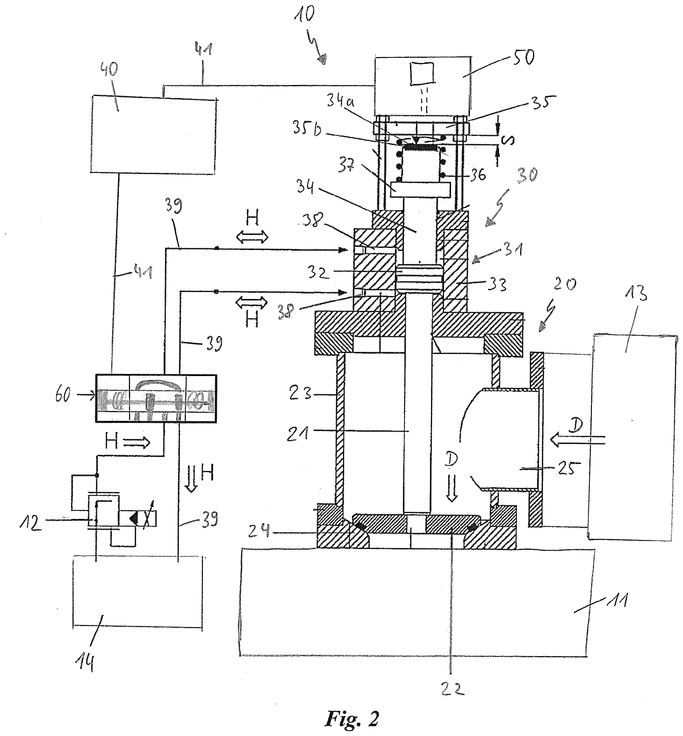

**Figur 2** zeigt die Ventilvorrichtung 10 mit einem daran angeordneten Verbraucher 11, der beispielsweise als Formkasten 71 ausgebildet sein kann. Die Sperrventileinrichtung 20 für eine Druckluftströmung D aus einer beispielsweise mit einem Eingangsflansch des mehrteiligen Sperrventilgehäuses 23 der Sperrventileinrichtung 20 verbundenen Druckluftquelle 13 ist mit einem Ventilsitz 22 ausgerüstet, der mit dem als Ventilteller ausgebildeten Verschlusselement 22 zum Sperren einer Druckluftzufuhr zum Verbraucher 11 zusammenwirkt. Das an dem Ventilsitz 24 anlegbare Verschlusselement 22 ist mit einem Ende einer Ventilstange 21 verbunden, die in einer mit dem Ventilsitz 24 achsfluchtenden Durchführung zum Zylindergehäuse 33 des Hydraulikzylinders 31 längsbeweglich gelagert ist. Das Verschlusselement kann somit innerhalb des Sperrventilgehäuses 23 gegenüber dem Ventilsitz 24 bewegt werden, wodurch dem Verbraucher 11 eine Druckluftströmung D zugeführt werden kann. Die Druckluftströmung D gelangt von der Druckluftquelle 13 über den Anschlussstutzen 25, der am Sperrventilgehäuse 23 angeordnet ist, in das Sperrventilgehäuse 23. Mit dem Deckel des Zylindergehäuses 33 ist ein ortsfestes Anschlagselement 35 fest verbunden, wobei der Abstand des Anschlagselements 35 zum Zylindergehäuse 33 veränderlich einstellbar ist. Eine Stirnseite 34a der Kolbenstange 34 kann an dem Anschlagselement 35 über die Anschlagsdämpfung 35b anschlagen. Mit Figur 2 ist die Sperrventileinrichtung 20 im geschlossenen Zustand gezeigt, sodass der durch das Anschlagselement 35 festgelegte freie Hub des Kolbens 32 und somit des Verschlusselements 22 erkennbar ist. Am Anschlagselement 35 kann eine Rückstellfeder 36 zur Anlage kommen, die beispielsweise als Schraubenfeder die Kolbenstange 34 umgebend ausgebildet sein kann. Die Rückstellfeder 36 kann auf dem Abstützbund 37 mit ihrem vom Anschlagselement 35 entfernten Ende abgestützt sein, so dass die Rückstellfeder 36 zwischen Anschlagselement 35 und Abstützbund 37 angeordnet ist. Das Zylindergehäuse 33 weist zwei Durchlässe 38 auf, um aus den Hydraulikleitungen 39 die Druckflüssigkeit H, die auch als Hydraulikflüssigkeit bezeichnet werden kann, dem Zylindergehäuse 33 zuführen zu können. Die Hydraulikleitungen 39 verbinden die Durchlässe 38 mit der Proportionalventileinrichtung 60 und die Proportionalventileinrichtung 60 mit der Druckflüssigkeitsquelle 14, beispielsweise einer Hydraulik-Pumpe. Über die Proportionalventileinrichtung 60 ist eine stetige Veränderung des Volumenstroms der Druckflüssigkeit H zum Hydraulikzylinder 31 der Betätigungseinrichtung 30 möglich. Vor der Zuleitung der Druckflüssigkeit H aus der Druckflüssigkeitsquelle 14 zur Proportionalventileinrichtung 60 kann die Druckflüssigkeit H eine Druckregelungseinrichtung 12, die beispielsweise als Druckminderer ausgebildet ist, durchlaufen, sodass der von der Druckflüssigkeitsquelle 14 bereitgestellte Druck der Druckflüssigkeit H reduziert und/oder eingestellt werden kann. An der Bestätigungseinrichtung 30 ist ferner eine Messeinrichtung 50 angeordnet, die die Kolbenposition ermittelt und somit auch Veränderungen des Kolbenhubs s erfassen kann. Über die Datenleitungen 41 ist die Messeinrichtung 50 mit der Regeleinrichtung 40 und die Regeleinrichtung 40 mit der Proportionalventileinrichtung 60 zum Datenaustausch und/oder Signalaustausch verbunden. Mittels der Regeleinrichtung 40 können die Messwerte der Messeinrichtung 50 hinsichtlich Kolbenposition und/oder Kolbenhub ausgewertet werden, wobei beispielsweise ein Soll-IstVergleich von der Regeleinrichtung 40 durchgeführt wird. Die Proportionalventileinrichtung 60 kann von der Regeleinrichtung 40 elektrisch angesteuert werden, sodass, falls erforderlich, der Volumenstrom der Druckflüssigkeit H, der dem Zylindergehäuse 33 der Betätigungseinrichtung 30 zugeführt wird, verändert werden kann, um das Öffnungs- und Schließverhalten der Sperrventileinrichtung 20 zu verändern.

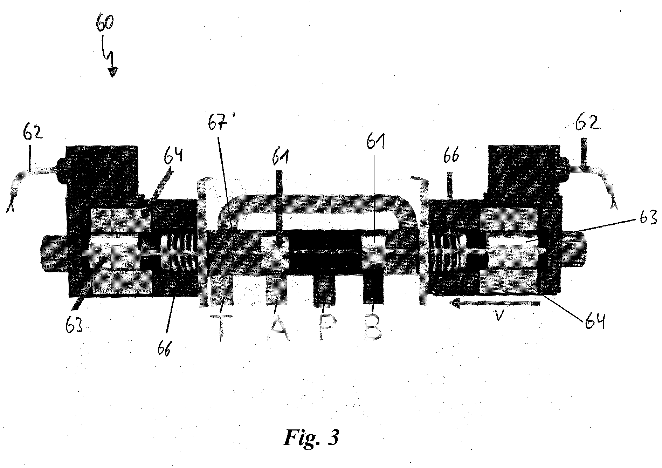

**Figur 3** zeigt die Proportionalventileinrichtung 60 in Alleinstellung. Die Proportionalventileinrichtung 60 ist als 4/4-Proportionalventil ausgebildet und weist daher vier Ventilanschlüsse A, B, P, T zur Zuleitung und/oder Ableitung der Druckflüssigkeit H auf. Die Ventilanschlüsse sind mit T für Tank, P für Pressure (Druck) sowie A und B für Verbraucher gekennzeichnet. Insbesondere die Volumenströme an Druckflüssigkeit H, die aus der Proportionalventileinrichtung 60 der Betätigungseinrichtung 30, insbesondere dem Zylindergehäuse 33, zugeführt werden, können über verschiedene Stellungen der Ventilkolben 61 aufgrund des stetigen Schaltverhaltens der Proportionalventileinrichtung 60 präzise geregelt werden. Dieses Schaltverhalten wird mittels der Magneten 63 und Spulen 64 ermöglicht, die elektrisch ansteuerbar sind und dadurch die Ventilkolben 61 in verschiedene Ventilkolbenstellungen überführen können. Wie aus Figur 3 ersichtlich, sind die Magnete 63 gemeinsam mit dem Ventilkolben 61 an einer gemeinsamen Achse 67 angeordnet. An den beiden Enden der Achse 67 sind die Magnete 63 angeordnet, die jeweils über die ansteuerbare Spule 64 eine in der gezeigten Ausführungsform horizontale Kraft erfahren, wodurch eine Bewegung der Achse 67 mit den ortsfest an der Achse 67 angeordneten Ventilkolben 61 in Achsenbewegungsrichtung V erfolgen kann. Somit wird aufgrund der Zuführung von Strom zur Spule 64, die mit den Magneten 63 zusammenwirkt, eine Bewegung der Achse 67 bewirkt, da Magnet 63 und Ventilkolben 61 ortsfest an der Achse 67 angeordnet sind. Wenn kein Strom an der Spule 63 anliegt kann der Magnet 63 über eine der Ventilfedern 66 in eine Grundposition zurückgestellt werden, wobei in der Grundposition die zum hier nicht gezeigten Verbraucher führenden Ventilanschlüsse A und B geschlossen sind. Die Grundstellung ist in Figur 3 gezeigt. In den Endstellungen, also der maximalen Auslenkung der Ventilkolben 61 sind jeweils unterschiedliche Ventilanschlüsse A, B, P, T miteinander verbunden. Gemäß der gezeigten Darstellung in der rechten Endstellung ist der Ventilanschluss T mit dem Ventilanschluss A sowie der Ventilanschluss P mit dem Ventilanschluss B verbunden. In der linken Endstellung ist der Ventilanschluss T mit dem Ventilanschluss B sowie der Ventilanschluss P mit dem Ventilanschluss A verbunden. Der die Bewegung der Achse 67 bewirkende elektrische Strom kann über den elektrischen Anschluss 62 zugeführt werden. Die hier nicht dargestellte Regeleinrichtung 40 ist dazu ausgebildet, den der Proportionalventileinrichtung 60 zugeführten Strom zu steuern und dadurch das Öffnungsverhalten der Sperrventileinrichtung 20 zu regeln. Die Zufuhr der Druckflüssigkeit H zu dem in Figur 3 nicht gezeigten Hydraulikzylinder 31 der Betätigungseinrichtung 30, die mit der Sperrventilvorrichtung 20 zur Betätigung dieser zusammenwirkt, ermöglicht ein modulierendes Öffnungsverhalten der Sperrventilvorrichtung 20, wodurch eine effizientere Nutzung der Druckluft gewährleistet wird.

## Patentansprüche

1. Ventilvorrichtung (10) aufweisend eine Sperrventileinrichtung (20) mit einer Ventilstange (21) und einem einends an der Ventilstange (21) angeordneten Verschlusselement (22) für die Druckluftzufuhr zu einem Verbraucher (11),
weiter aufweisend eine Betätigungseinrichtung (30) mit einem Hydraulikzylinder (31), wobei der Kolben (32) des Hydraulikzylinders (31) mit der Ventilstange (21) fest verbunden ist und zur Betätigung der Sperrventileinrichtung (20) innerhalb des Zylindergehäuses (33) des Hydraulikzylinders (31) hydraulisch antreibbar ist,
**dadurch gekennzeichnet,**
**dass** eine Regeleinrichtung (40) zur Regelung der Kolbenbewegung und eine Messeinrichtung (50) zur Ermittlung der Kolbenposition umfasst ist, wobei eine von der Regeleinrichtung (40) in Abhängigkeit der Kolbenposition ansteuerbare Proportionalventileinrichtung (60) fluidleitend mit dem Hydraulikzylinder (31) verbunden ist.

2. Ventilvorrichtung nach Anspruch 1,
**dadurch gekennzeichnet,**
**dass** die Messeinrichtung (50) zur Ermittlung der Kolbenposition einen Lasertriangulationssensor und/oder einen berührungslosen, bevorzugt magnetostriktiven, Wegmesssensor und/oder einen Ultraschalldistanzsensor aufweist.

3. Ventilvorrichtung nach Anspruch 1 oder 2,
**dadurch gekennzeichnet,**
**dass** die Proportionalventileinrichtung (60) als 4/4-Proportionalventil ausgebildet ist.

4. Ventilvorrichtung nach einem der Ansprüche 1 bis 3,
**dadurch gekennzeichnet,**
**dass** die Ventilkolben (61) der Proportionalventileinrichtung (60) stromgesteuert verstellbar sind.

5. Ventilvorrichtung nach einem der Ansprüche 1 bis 4,
**dadurch gekennzeichnet,**
**dass** die Regeleinrichtung (40) einen PID-Regler aufweist.

6. Ventilvorrichtung nach einem der Ansprüche 1 bis 5,
**dadurch gekennzeichnet,**
**dass** der Kolben (32) doppelt wirkend ausgebildet ist.

7. Ventilvorrichtung nach einem der Ansprüche 1 bis 6
**dadurch gekennzeichnet,**
**dass** an dem Kolben (32), der Ventilstange (21) gegenüberliegend, eine zu dieser achsfluchtende Kolbenstange (34) angeordnet ist, wobei die Ventilstange (21) und die Kolbenstange (34) ungleiche Durchmesser aufweisen.

8. Ventilvorrichtung nach einem der Ansprüche 1 bis 7,
**dadurch gekennzeichnet,**
**dass** die Bewegung (s) des Kolbens (32) durch ein ortsfestes, vorzugsweise einstellbares, Anschlagselement (35) begrenzt ist.

9. Ventilvorrichtung nach einem der Ansprüche 1 bis 8,
**dadurch gekennzeichnet,**
**dass** an dem Kolben (32), der Ventilstange (21) gegenüberliegend, eine zu dieser achsfluchtende Kolbenstange (34) angeordnet ist, die mit ihrer freien, dem Verschlusselement (21) abgewandten Stirnseite (34a) an dem Anschlagselement (35) zur Anlage bringbar ist.

10. Ventilvorrichtung nach Anspruch 9,
**dadurch gekennzeichnet,**
**dass** an der freien Stirnseite (34a) der Kolbenstange (32) und/oder an dem Anschlagselement (35) eine Anschlagsdämpfung (35b) vorgesehen ist.

11. Ventilvorrichtung nach einem der Ansprüche 1 bis 10,
**dadurch gekennzeichnet,**
**dass** eine ortsfeste Rückstellfeder (36) so angeordnet ist, dass die Ventilstange (21) bei dem Öffnen der Sperrventileinrichtung (20) gegen die Federkraft der Rückstellfeder (36) bewegt wird.

12. Ventilvorrichtung nach einem der Ansprüche 1 bis 11,
**dadurch gekennzeichnet,**
**dass** der Proportionalventileinrichtung (60) vorgelagert eine einstellbare Druckregelungseinrichtung (12) angeordnet ist.

13. Formmaschine (70) zum Verdichten eines Formstoffs (71) aufweisend einen mit dem Formstoff (71) befüllbaren Formkasten (72), wobei in dem Formkasten (72) ein Modell (73) anordbar ist, und wobei der Formkasten (72) an eine Druckluftzufuhr (D) angeschlossen ist, und weiter aufweisend eine Ventilvorrichtung (10) nach einem der Ansprüche 1 bis 12 zur Freigabe der Druckluftzufuhr (D) zu dem Formkasten (72), wobei durch Druckluftbeaufschlagung und anschließendes Pressen des Formstoffs (71) eine Form ausbildbar ist.

14. Verfahren zur Regelung einer Ventilvorrichtung (10) aufweisend eine Sperrventileinrichtung (20) mit einer Ventilstange (21) und einem einends an der Ventilstange (21) angeordneten Verschlusselement (22) für die Druckluftzufuhr (D) zu einem Verbraucher, weiter aufweisend eine Betätigungseinrichtung (30) mit einem Hydraulikzylinder (31), wobei der Kolben (32) des Hydraulikzylinders (31) mit der Ventilstange (21) fest verbunden ist und zur Betätigung der Sperrventileinrichtung (21) innerhalb des Zylindergehäuses (33) des Hydraulikzylinders (31) hydraulisch angetrieben wird,
wobei die Kolbenposition mittels einer Messeinrichtung (50) ermittelt wird, und wobei die Kolbenbewegung in Abhängigkeit der ermittelten Kolbenposition geregelt wird, indem eine fluidleitend mit dem Hydraulikzylinder (31) verbundene Proportionalventileinrichtung (60) derart angesteuert wird, dass der dem Hydraulikzylinder (31) zugeführte Volumenstrom an Druckflüssigkeit (H) verändert wird.

15. Verfahren nach Anspruch 14,
wobei die Kolbenposition und/oder der Kolbenhub in regelmäßigen zeitlichen Abständen mittels der Messeinrichtung (50) ermittelt werden und als Ist-Wert an eine Regeleinrichtung (40) übermittelt werden, wobei mittels der Regeleinrichtung (40) der Ist-Wert mit einem Soll-Wert verglichen wird, und wobei bei einer Abweichung von Soll-Wert und Ist-Wert das zur Steuerung der Proportionalventileinrichtung (60) gesendete Steuersignal von der Regeleinrichtung (40) verändert wird.
